Europäisches Patentamt

European Patent Office

Office européen des brevets

(19)

(11)  **EP 1 496 016 A1**

(12)  # DEMANDE DE BREVET EUROPEEN

(43) Date de publication:
**12.01.2005  Bulletin 2005/02**

(51) Int Cl.$^7$: **C01G 49/00**, C02F 1/72

(21) Numéro de dépôt: **04102653.5**

(22) Date de dépôt: **10.06.2004**

(84) Etats contractants désignés:
**AT BE BG CH CY CZ DE DK EE ES FI FR GB GR HU IE IT LI LU MC NL PL PT RO SE SI SK TR**
Etats d'extension désignés:
**AL HR LT LV MK**

(30) Priorité: **11.06.2003  FR 0306976**

(71) Demandeur: **Inertec**
**92000 Nanterre (FR)**

(72) Inventeurs:
- **Cojan, Jean-Yves**
  **92200 Neuilly sur Seine (FR)**
- **Verschuere, David**
  **27120 Le Val David (FR)**
- **Tedjar, Farouk**
  **38000 Grenoble (FR)**

(74) Mandataire: **Nevant, Marc**
**Cabinet Beau de Loménie,**
**158, rue de l'Université**
**75340 Paris Cedex 07 (FR)**

(54)  **Procédé de synthèse de ferrates**

(57)  L'invention concerne un procédé de synthèse de ferrates de métaux alcalins et alcalino-terreux, qui comprend les étapes suivantes :

a) on mélange un composé de fer trivalent avec de la potasse et éventuellement du persulfate ;
b) on chauffe le mélange à une température comprise dans la gamme allant d'environ 250 à environ 500 °C pendant environ 1 à 10 h.

L'invention concerne aussi l'utilisation des ferrates obtenus par ce procédé.

**Description**

La présente invention concerne un procédé de fabrication de ferrates de métaux alcalins et alcalino-terreux, et l'utilisation des ferrates ainsi obtenus.

L'invention trouve application notamment dans le domaine du traitement de l'eau et dans le domaine des piles alcalines.

Les ferrates sont des oxydants forts obtenus par oxydation du fer à l'état de valence III en fer à l'état de valence VI. Ces produits sont connus depuis plus d'un siècle. Ils ont été signalés pour la première fois en 1841 par Fremy, puis décrits par Stahl à partir de 1884 (J. Prakt. Chem., 32, 448,1884).

Plusieurs méthodes de synthèse par oxydation chimique ont été proposées à partir des années 1950. Selon l'une de ces méthodes, décrite dans J. Am. Chem. Soc., 73, 1379, 1951, des sels de Fe(VI) sont obtenus par réaction d'une solution de soude et d'hypochlorite de calcium avec un sel de Fe(III) tel que $Fe(NO_3)_3$. Une autre méthode, décrite dans Anal. Chem., 26, 1957, 1954, concerne l'obtention d'un sel de Fe(VI) tel que $BaFeO_4$ par précipitation d'un autre sel de Fe(VI) tel que $K_2FeO_4$.

Plus récemment, le brevet US 5,284,642 décrit une méthode pour la synthèse par voie solide d'un sulfatoferrate de métal alcalin ou alcalino terreux, de formule $M(Fe,S)O_4$ dans laquelle M représente deux atomes de sodium ou de potassium, ou un atome de calcium ou de baryum. Cette méthode fait intervenir la réaction de sulfate ferreux $FeSO_4, 7H_2O$ avec de l'hypochlorite de calcium et de la potasse. Une amélioration de ce procédé est décrite dans la demande FR-A-2 800 056, où l'hypochlorite de sodium est remplacé par du chlore gazeux $Cl_2$.

Ces méthodes présentent néanmoins différents inconvénients :

- le chlore gazeux est un réactif dangereux et nocif,
- des effluents chlorés dont le traitement reste problématique, sont produits en quantité importante,
- les rendements en ferrate sont faibles,
- les espèces chlorées peuvent conduire en milieu alcalin à la formation de chlorates, composés peu stables et explosifs,
- la tenue des matériaux en présence de chlore et à chaud est problématique. Seuls des alliages spéciaux et onéreux peuvent être utilisés.

Un problème que se propose de résoudre la présente invention est de fournir un procédé de synthèse de ferrates de métaux alcalins et alcalino-terreux qui ne nécessite pas l'utilisation de réactifs dangereux et/ou nocifs pour la santé.

Un autre problème que se propose de résoudre l'invention est de fournir un procédé de synthèse de ferrates de métaux alcalins et alcalino-terreux qui est économique du fait qu'il ne nécessite pas de recyclage ou d'élimination d'effluents délicats ou dangereux à manipuler.

Un autre problème que se propose de résoudre l'invention est de fournir un procédé qui permet d'obtenir des ferrates de métaux alcalins et alcalino-terreux avec un rendement acceptable pour une production industrielle.

Il a maintenant été découvert de manière surprenante, et c'est le fondement de l'invention, que l'utilisation de persulfate comme agent oxydant dans la synthèse de ferrates, apporte une solution aux problèmes énoncés ci-dessus.

Ainsi, selon un premier aspect, l'invention a pour objet un procédé de synthèse de ferrates de métaux alcalins et alcalino-terreux, qui comprend les étapes suivantes :

a) on mélange un composé de fer trivalent avec de la potasse et éventuellement un persulfate ;
b) on chauffe le mélange à une température comprise dans la gamme allant d'environ 250 à environ 500 °C pendant environ 1 à 10 h, de préférence pendant environ 4 à 8h.

De manière avantageuse, le mélange précité est chauffé en appliquant un gradient de température. Par exemple, il est possible de chauffer le mélange dans une étape b1) à une température comprise dans la gamme allant d'environ 250 à environ 350 °C pendant environ 1 à 5h. Si le persulfate n'a pas été ajouté à l'étape a), il est additionné dans une étape b2) au produit obtenu à l'étape b1). L'addition est généralement effectuée après refroidissement dudit produit. Il est également possible de rajouter de la potasse avec le persulfate. Dans une dernière étape b3), le produit obtenu à l'étape b1) ou à l'étape b2) est chauffé à une température comprise dans la gamme allant d'environ 375 à environ 500 °C pendant environ 1 à 5h.

On récupère ensuite le ferrate synthétisé de manière conventionnelle, et on le transforme éventuellement en un autre ferrate (par exemple un ferrate de métal alcalin peut être transformé en ferrate de métal alcalino-terreux comme indiqué ci-dessus).

Le composé de fer trivalent susceptible d'être utilisé dans le cadre de l'invention est par exemple un sel ferrique, notamment le sulfate ferrique ($Fe_2(SO_4)_3$) hydraté ou non, ou un oxyde de fer, notamment sous la forme de pigment, tel que la goethite ($\alpha$-FeOOH) ou l'hématite ($\alpha$-$Fe_2O_3$). Le sulfate ferrique peut être obtenu selon le procédé décrit dans la demande WO 02/090270. Les oxydes de fer peuvent être obtenus par exemple selon les procédés décrits dans les demandes EP-A-1 064 226, EP-A-1 106 577, EP-A-1 132 343. Le composé de Fe(III) est avantageusement sous forme solide. Lorsque ce composé se présente sous la forme d'une solution, celle-ci est avantageusement neutralisée pour précipiter et récupérer le composé de fer sous forme solide. La neutralisation peut être effectuée par exemple à l'aide de soude, de chaux, de magnésie.

Selon un mode de réalisation particulier de l'invention, le composé de Fer(III) peut être obtenu à partir d'un composé de Fer(II), notamment un sel ferreux. Par exemple, une solution de sulfate ferreux ($Fe(SO_4)_2$), qui est un sous-produit de la fabrication du dioxyde de titane $TiO_2$, est neutralisée comme indiqué ci-dessus. La solution neutralisée est ensuite oxydée, par exemple au moyen d'eau oxygénée, d'air, d'air enrichi en oxygène ou d'oxygène gazeux, et le composé de Fer(III) est récupéré selon des techniques conventionnelles.

Le persulfate est indifféremment utilisé sous la forme sodique ($Na_2S_2O_8$), potassique ($K_2S_2O_8$) ou d'ammonium (($NH_4)_2S_2O_8$). Il est disponible commercialement sous la forme sodique et potassique. Généralement, la quantité de persulfate est en excès stoechiométrique d'environ 1 à 15% par rapport à la quantité de composé de Fer (III).

La potasse (KOH) est généralement disponible commercialement sous la forme de pastilles ; elle est utilisée en une quantité en excès stoechiométrique d'environ 0,5 à environ 10% par rapport à la quantité de composé de Fer(III).

Le procédé de l'invention met en jeu du persulfate, qui est un composé stable, peu toxique, et avec un bon pouvoir oxydant.

Ainsi, selon un second aspect, l'invention concerne l'utilisation de persulfate de sodium, de potassium ou d'ammonium comme agent oxydant dans la synthèse de ferrates de métaux alcalins ou alcalino-terreux.

Le procédé de synthèse conforme à l'invention permet d'obtenir des ferrates du type $MFeO_4$ où M représente soit deux atomes de métal alcalin comme le lithium, le sodium, le potassium, soit un atome de métal alcalino-terreux comme le magnésium, le calcium, le baryum. Le procédé de synthèse de l'invention permet également d'obtenir des ferrates du type $M(Fe,X)O_4$ où M est tel que défini ci-dessus et X est un atome choisi parmi Al, Si, P, S, Cl, Mo, Mn, Cr. Cependant en vue d'une utilisation du produit dans le traitement des eaux, les éléments polluants tel que le chrome seront à proscrire.

En raison de leur fort pouvoir oxydant, les ferrates obtenus selon le procédé de l'invention sont notamment utiles comme agents de traitement des eaux, notamment des eaux usées (voir à ce sujet l'article paru dans Rev. Sci. Eau 1996, 1 : 17-30) et comme cathodes de piles alcalines (voir à ce sujet le brevet US 6,387,569).

L'invention est illustrée par les exemples suivants, donnés à titre purement indicatif.

**Exemple 1 : synthèse de ferrate de potassium**

On pèse 5 g de Fe(III) exprimé en équivalents $Fe_2O_3$ que l'on mélange avec 3,5137 g de KOH. Ce mélange est placé dans un creuset en nickel, puis chauffé dans un four à 300 °C pendant 4 h. Après refroidissement on ajoute 15,5 g de KOH et 28 g de $K_2S_2O_8$ et on homogénéise l'ensemble. L'échantillon est remis au four à 400 °C pendant 3 h.

Après refroidissement dans un dessiccateur, on obtient 47 g de produit qui est ensuite broyé et analysé par diffraction des rayons X. Le profil de diffraction montre la présence de raies de $K_2FeO_4$ uniquement.

**Exemple 2 : synthèse de ferrate de potassium**

On pèse 1 g de Fer(III) exprimé en équivalents $Fe_2O_3$, que l'on mélange avec 5,85 g de $K_2S_2O_8$ et 3,5 g de KOH en pastilles broyées. Ce mélange est placé dans un creuset en nickel, puis chauffé dans un four à 300 °C pendant 3 h, puis pendant 1 h à 400 °C.

La réaction peut être représentée de la manière suivante :

$$10\ KOH + Fe_2O_3 + 3\ K_2S_2O_8 \longrightarrow 2\ K_2FeO_4 + 6\ K_2SO_4 + 5\ H_2O$$

Après refroidissement, on recueille 9,8 g de produit qui est placé au dessiccateur puis analysé par diffraction des rayons X. Le profil de diffraction montre la présence de raies de $KFeO_2$ et de $K_2FeO_4$, et la formation de $K_2SO_4$.

**Exemple 3 : synthèse d'un composé de Fer(III)**

Une solution contenant du $FeSO_4$ en milieu acide est utilisée comme source de fer. Le pH de la solution de départ est de 0,6 et le potentiel rédox s'équilibre autour de E = -117 mV/ECS. Cela confirme bien que le fer est sous forme divalente. Cette solution est neutralisée au moyen de soude à 30% à raison de 150 ml pour 100 ml de solution de Fe(II). Après neutralisation, le pH atteint la valeur de 5,8 alors que le potentiel rédox de la solution s'équilibre autour de -168mV/ECS. Cette valeur indique que le fer est encore sous forme de Fe(II).

La solution est ensuite oxydée au moyen d'eau oxygénée, à raison de 1,3 ml de $H_2O_2$ à 35% pour 50 ml de solution de Fe(II). Au cours de cette oxydation, le pH régulé a une valeur de 3,8. La fin de l'oxydation est indiquée par le saut de potentiel qui passe de - 168 mV à +511 mV/ECS. Cette valeur indique que le fer est sous forme de Fe(III).

Après agitation d'une heure pour assurer la croissance cristalline, la pulpe obtenue est filtrée. On obtient 6,5 g de précipité jaune (goethite) qui, séché, peut servir de source de fer dans la préparation d'un ferrate selon le mode opératoire décrit à l'exemple 2.

Le filtrat ne contient plus que 39,2 mg/l de fer indiquant ainsi un fort taux de récupération du fer.

**Revendications**

1. Procédé de synthèse de ferrates de métaux alcalins et alcalino-terreux, qui comprend les étapes suivantes :

   a) on mélange un composé de fer trivalent avec de la potasse et éventuellement un persulfate ;
   b) on chauffe le mélange à une température comprise dans la gamme allant d'environ 250 à environ 500 °C pendant environ 1 à 10 h.

2. Procédé selon la revendication 1, dans lequel :

   b1) le mélange obtenu à l'étape a) est chauffé à une température comprise dans la gamme allant d'environ 250 à environ 350 °C pendant environ 1 à 5h ;
   b2) on ajoute éventuellement un persulfate au produit obtenu à l'étape b1) ; et
   b3) le produit obtenu à l'étape b1) ou à l'étape b2) est chauffé à une température comprise dans la gamme allant d'environ 375 à environ 500 °C pendant environ 1 à 5h.

3. Procédé selon la revendication 1 ou 2, dans lequel le composé de fer trivalent est un sel ferrique, ou un oxyde de fer.

4. Procédé selon la revendication 3, dans lequel l'oxyde de fer est la goethite ou l'hématite.

5. Procédé selon l'une des revendications 1 à 4, dans lequel le composé de fer trivalent est obtenu à partir d'un composé de fer divalent, notamment un sel ferreux.

6. Procédé selon l'une des revendications 1 à 5, dans lequel le persulfate est sous forme sodique, potassique ou d'ammonium.

7. Procédé selon l'une des revendications 1 à 6, dans lequel on utilise un excès stoechiométrique de persulfate d'environ 1 à 15% par rapport à la quantité de fer trivalent.

8. Procédé selon l'une des revendications 1 à 7, dans lequel on utilise un excès stoechiométrique de potasse d'environ 0,5 à 10% par rapport à la quantité de fer trivalent.

9. Utilisation du persulfate de sodium, de potassium ou d'ammonium comme agent oxydant dans la synthèse de ferrates de métaux alcalins ou alcalino-terreux.

10. Utilisation d'un ferrate obtenu par le procédé défini dans l'une des revendications 1 à 8, comme agent de traitement des eaux.

11. Utilisation d'un ferrate obtenu par le procédé défini dans l'une des revendications 1 à 8, comme cathode de pile alcaline.

**Office européen des brevets**

**RAPPORT DE RECHERCHE EUROPEENNE**

Numéro de la demande

EP 04 10 2653

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A,D | WO 91/07352 A (EAU DE NANCY NAN C I E CENTRE ;EVRARD OMER (FR)) 30 mai 1991 (1991-05-30) * page 5, ligne 8 - ligne 24; revendications 1-5 * | 1-8,10 | C01G49/00 C02F1/72 |
| A | WO 03/042106 A (CARIOU JEAN ;COVALSUD SARL (FR); KNEIP ALAIN (FR); CASTETBON ALAIN) 22 mai 2003 (2003-05-22) | 1-8,10 | |
| Y | * page 3, ligne 1 - page 4, ligne 8 * * page 5, ligne 7 - ligne 25 * * page 1, ligne 9 - ligne 11; revendications 16,17 * | 9 | |
| Y | A.F. HOLLEMANN, E. WIBERG, N. WIBERG: "Lehrbuch der Anorganischen Chemie, 101. Auflage" 1995, WALTER DE GRUYTER , BERLIN, NEW YORK , XP002303347 * page 598, alinéa 4 * | 9 | |
| A | US 5 093 091 A (DAUPLAISE DAVID L ET AL) 3 mars 1992 (1992-03-03) * colonne 2, ligne 34 - ligne 41 * | 6 | |

DOMAINES TECHNIQUES RECHERCHES (Int.Cl.7)

C01G
C02F

Le présent rapport a été établi pour toutes les revendications

| Lieu de la recherche | Date d'achèvement de la recherche | Examinateur |
|---|---|---|
| La Haye | 29 octobre 2004 | Siebel, E |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**
　　　　　　　　　　　　　　　　　　　　　　　　　　　EP 04 10 2653

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-10-2004

| Document brevet cité au rapport de recherche | | Date de publication | Membre(s) de la famille de brevet(s) | | Date de publication |
|---|---|---|---|---|---|
| WO 9107352 | A | 30-05-1991 | FR | 2654092 A1 | 10-05-1991 |
| | | | AT | 100423 T | 15-02-1994 |
| | | | AU | 7044091 A | 13-06-1991 |
| | | | DE | 69006220 D1 | 03-03-1994 |
| | | | DE | 69006220 T2 | 05-05-1994 |
| | | | DE | 504156 T1 | 19-05-1993 |
| | | | EP | 0504156 A1 | 23-09-1992 |
| | | | WO | 9107352 A1 | 30-05-1991 |
| | | | US | 5284642 A | 08-02-1994 |
| WO 03042106 | A | 22-05-2003 | FR | 2832399 A1 | 23-05-2003 |
| | | | CA | 2467272 A1 | 22-05-2003 |
| | | | EP | 1446357 A1 | 18-08-2004 |
| | | | WO | 03042106 A1 | 22-05-2003 |
| US 5093091 | A | 03-03-1992 | AUCUN | | |

EPO FORM P0460